Europäisches Patentamt

(19) **European Patent Office**

**Office européen des brevets**

(11) Publication number: **0 025 033**
**B1**

(12) **EUROPEAN PATENT SPECIFICATION**

(45) Date of publication of patent specification: **20.07.83**

(21) Application number: **79901241.4**

(22) Date of filing: **07.03.79**

(86) International application number:
**PCT/US79/00140**

(87) International publication number:
**WO 80/01933 18.09.80 Gazette 80/21**

(51) Int. Cl.³: **F 01 N 1/00, F 01 N 7/16,
F 04 B 39/00, F 16 L 55/02**

(54) **HYDRAULIC NOISE ATTENUATOR.**

(43) Date of publication of application:
**18.03.81 Bulletin 81/11**

(45) Publication of the grant of the patent:
**20.07.83 Bulletin 83/29**

(84) Designated Contracting States:
**DE FR GB SE**

(56) References cited:
**DE - A - 1 625 918**
**DE - A - 2 521 119**
**FR - A - 1 046 390**
**FR - A - 2 044 428**
**FR - A - 2 386 767**
**GB - A - 1 481 355**
**US - A - 2 261 948**
**US - A - 2 392 247**
**US - A - 2 495 693**
**US - A - 3 113 635**
**US - A - 3 187 837**
**US - A - 3 379 221**
**US - A - 3 430 659**
**US - A - 3 526 293**
**US - A - 3 665 967**
**US - A - 3 955 643**
**US - A - 3 982 605**

(73) Proprietor: **CATERPILLAR TRACTOR CO.**
**100 Northeast Adams Street**
**Peoria Illinois 61629 (US)**

(72) Inventor: **HANSEN, Robert C.**
**101 Hickory Point**
**East Peoria, IL 61611 (US)**

(74) Representative: **Wagner, Karl H. (DE)**
**Gewürzmühlstrasse 5 (Postfach 246)**
**D-8000 München 22 (DE)**

Courier Press, Leamington Spa, England

Hydraulic noise attenuator

## Technical Field

This invention relates to a hydraulic noise attenuator for attenuating a wide range of noise levels generated by fluid flowing therethrough.

## Background art

The utilization of high-pressure fluid circuits for the selective actuation of work implements on construction vehicles, for example, has given rise to the generation of relatively high noise levels. Such noise levels are primarily occasioned by the flow and pressure pulsations generated in the circulated hydraulic fluid by the pump and attendant working components of the fluid circuit. Various attempts have been made to provide an attenuator in the fluid circuit for eliminating the noise problem but, to date, all such attempts have been found to be only partially effective when both the specific fluid-borne noise frequencies and the system mean pressure vary significantly during a particular work cycle.

In the type of system mentioned above, the load on the system will vary during the work cycle and thus mean system pressures will vary over a wide range whereby conventional "tuned" attenuators have limited effect in the attenuation of noise levels. For example, one such conventional attenuator comprises a rigid outer vessel having an elastomeric tube disposed therein. A gas chamber is defined between the vessel and tube and contains an inert gas, such as nitrogen. In addition, a throttling tube is disposed within the elastomeric tube to communicate hydraulic fluid, flowing through the attenuator, to the elastomeric tube.

The pulses of the fluid flow through the attenuator thus pass through the throttling tube and against the elastomeric tube to compress the gas contained in the gas chamber. As suggested above, this type of attenuator tends to be highly "tuned" in that it is only effective for attenuating fluidborne noise when the mean system pressure is within a relatively narrow range.

Other types of conventional attenuators are also limited in their applications since they are only "tuned" to a particular frequency and thus cannot compensate for frequency changes resulting from changes in engine and pump speeds, as well as effects on frequency related to oil aeration level, system pressure, etc. (US—A—3 665 967).

## Disclosure of the invention

The present invention is directed to overcoming the difficulties set forth above.

The invention provides for a hydraulic noise attenuator as set forth in the first part of claim 1 and is characterised by the features indicated in the second part of claim 1.

Preferred embodiments of the invention are disclosed in the subclaims.

The fluidborne noise attenuator of this invention is thus effective to provide high noise attenuation over broad frequency and mean pressure ranges.

## Brief description of drawing

A preferred embodiment of the invention will become apparent from the following description and accompanying drawing which is a longitudinal sectional view of a fluidborne noise attenuator embodiment of the present invention, employed in a fluid circuit.

## Best mode of carrying out the invention

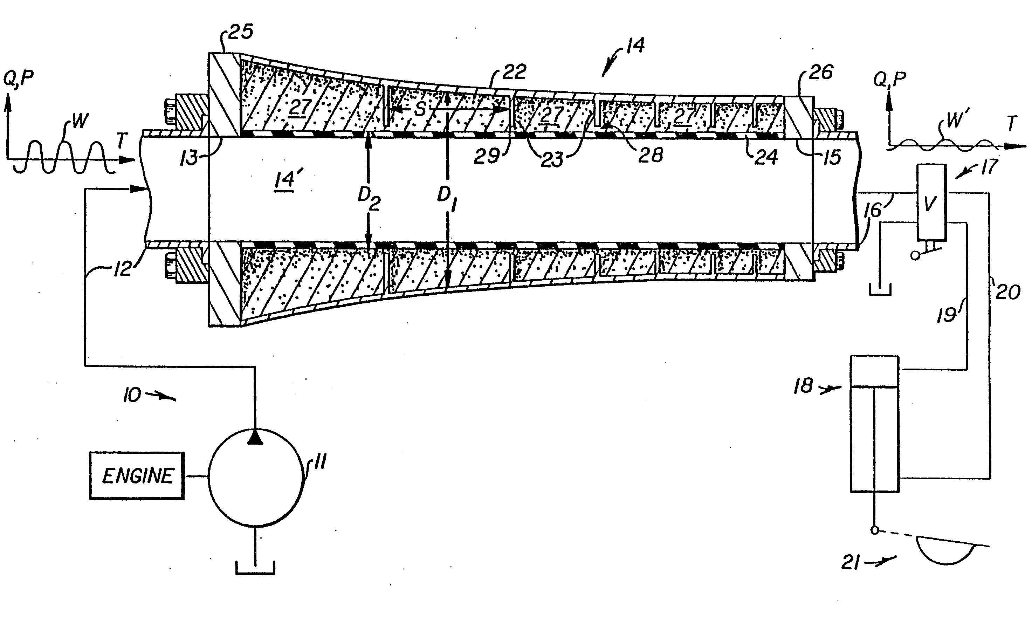

The drawing illustrates a fluid (hydraulic) circuit 10 comprising an engine-driven positive displacement pump 11 for communicating pressurized hydraulic fluid to a conduit 12. An inlet conduit 12 is suitably secured to an inlet 13 of an attenuator 14 which defines a flow passage 14' therethrough for communicating fluid flow to an outlet 15 thereof. An outlet conduit 16 is suitably interconnected between outlet 15 and a directional control valve 17. Directional control valve 17 functions in a conventional manner to communicate pressurized fluid to the rod or head end of a double-acting cylinder 18 and to simultaneously exhaust the other end thereof, via lines 19 and 20.

As shown, cylinder 18 is mechanically connected in a conventional manner to a work implement or tool 21, such as a loader bucket, to selectively place the work implement in a selected position of operation. Although hereinafter described fluidborne noise attenuator 14 is particularly adapted for use in conjunction with high pressure fluid circuits, such as the one generally shown in the drawing, the attenuator will find many other applications, as will be appreciated by those skilled in the arts relating hereto.

Fluidborne noise attenuator 14 essentially functions to attenuate noise levels generated by hydraulic fluid flowing through passage 14' thereof. As schematically illustrated, a particular sound wave W is represented by a wavy, horizontal line in which the upper part or crest of the wave indicates a condensation and the lower part or trough thereof indicates a rarification, as is well known to those skilled in the art. The abscissa of wave W represents time (T) plotted against the acoustic-frequency flow fluctuations (Q) or the related pressure fluctuations (P) of the hydraulic fluid, both on the ordinate of the wave.

It is also well known that the amplitude of vibration controls the intensity or loudness of the sound emanated by the hydraulic fluid. The sound becomes louder as the amplitude of vibration or wave increases, and the intensity decreases as the distance from the source producing the sound, such as pump 11, increases.

Attenuator 14 functions to dampen or reduce the amplitude wave W at inlet 13 down to an acceptable level, illustrated by wave W' at outlet 15 of the attenuator 14. It should be understood that wave W is a schematic representation of the noise phenomena which are considerably more complex than that illustrated. For example, the pulses of the fluid flowing through attenuator 14 will create an infinite number of waves W of varying frequencies and amplitudes with the mean pressure of the hydraulic fluid varying over a broad range. Attenuator 14 will effectively attenuate the noise levels of the hydraulic fluid passing through flow passage 14', over broad frequency and mean pressure ranges.

Fluidborne noise attenuator 14 comprises a tubular casing 22, preferably composed of a rigid metal, such as steel. A plurality of optional baffles 23 are secured internally of casing 22 and extend radially inwardly towards a longitudinal axis of attenuator 14. It should be noted that each adjacent pair of longitudinally spaced baffles 23 are separated by a distance S which distance is shown as becoming progressively less from inlet 13 to outlet 15 of attenuator 14. Although the specific spacing of baffles 23 will depend upon the particular attenuator application under consideration, the spacing between a first pair of baffles adjacent to inlet 13 is shown to be at least twice as great as the spacing between a second pair of baffles adjacent to outlet 15. It will be understood by those skilled in the art that other spacing arrangements of baffles 23 could be utilized, such as even or random spacing.

Fluidborne noise attenuator 14 further comprises a flexible and thin-walled conduit 24, defining flow passage 14' therethrough. Conduit 24 is preferably cylindrical and is disposed in concentric relationship relative to a longitudinal axis of attenuator 14. The opposite ends of conduit 24 are secured to a pair of longitudinally spaced end plates 25 and 26, defining inlet 13 and outlet 15 therein, respectively. The inner surface of each plate 25 and 26 may be considered to constitute a baffle similar to each baffle 23.

Conduit 24 may be composed of any suitable material, preferably a plastic or elastomeric solid polymeric material, which exhibits sufficient flexibility to expand and contract radially when subjected to internal fluid pressures of a predetermined magnitude. For example, conduit 24 may be composed of a suitable polymeric material exhibiting a durometer hardness in the range of from 45 to 80 Shore A whereby conduit 24 will flex radially when subjected to internal fluid pressures. Conduit 24 must also be compatible chemically with the hydraulic fluid flowing therethrough. For example, when the hydraulic fluid constitutes a fire-resistant phosphate ester, conduit 24 could be composed of Teflon (TFE) to be com-patible therewith.

The space between casing 22 and conduit 24 is at least substantially filled with a noise dampening medium or fluidborne noise means 27, having a bulk modulus substantially greater than an inert gas, but substantially less than the hydraulic working fluid (e.g., 1550 MPa) flowing through passage 14'. In the preferred embodiment of this invention, the bulk modulus of dampening medium 27 is preferably in the order of 344.5 MPa 1240 MPa and more preferably in the order of 344.5 MPa to 689 MPa. Also, dampening medium 27 is preferably in fluid form, although it could be elastomeric, as described below. Dampening medium 27 is preferably composed of a homogeneous material, such as silicone or rubber, which will function to dampen noise levels in the frequency range of from 100 to 5,000 Hz.

A clearance 28 is preferably provided between radially inner end 29 of each baffle 23 and conduit 24 whereby the separated chambers containing dampening medium 27 normally communicate with each other, except when conduit 24 flexes radially outwardly to close one or more of the clearances 28. The primary function of conduit 24 is to separate the hydraulic fluid flowing therethrough from dampening medium 27 to prevent co-mingling thereof, particularly when the dampening medium is maintained in a fluidized state.

In applications wherein dampening medium 27 exhibits sufficient solidarity (i.e., elastomeric) to prevent such co-mingling, conduit 24 could be eliminated and dampening medium 27 could be bonded or otherwise suitably secured directly to casing 22. The inside diameter of dampening medium 27 could thus be formed to define a tubular, preferably cylindrical, wall to further define passage 14' for conducting the hydraulic fluid through attenuator 14. In such an application, dampening medium 27 would still provide the desired noise dampening desiderata throughout a wide range of frequency levels.

In order to further increase the range of dampened frequencies, casing 22 and the diametrical size ($D_1$ minus $D_2$) of dampening medium 27 are preferably tapered downwardly, as shown, from inlet 13 to outlet 15 of attenuator 14. Baffles 23, which separate dampening medium 27 into individual compartments, will further aid in increasing such dampening range since each individual compartment of dampening medium 27 may be tuned for dampening a particular small range of frequencies. As indicated above, dampening medium 27 preferably has a bulk modulus within the range of from 344.5 MPa 689 MPa to provide the desired noise dampening effect. Thus, dampening medium 27 will exhibit a spring rate and bulk modulus well below that of hydraulic oil which is normally used in the type of fluid control circuits under consideration and which has a bulk modulus in the range of 1550 MPa.

As also discussed above, in a conventional dampening system wherein an inert gas, such as nitrogen, is employed as a dampening medium, the dampening medium is highly compressible. Thus, such a dampening medium can only be tuned for a specific frequency and mean system pressure application in contrast to attenuator 14 of this invention which is designed to dampen noise levels over a wide range of frequencies and means system pressures. For example, pump 11 is normally driven by a diesel engine, which is conditioned to operate over wide speed ranges, resulting in a wide range of flow and pressure fluctuations.

As shown in the drawing, the inside surface (diameter $D_i$) of casing 22 and the outer surfaces of composite dampening medium 27 may be generally formed as a hyperboloidic section to provide the above-discussed taper from inlet 13 to outlet 15 of attenuator 14. However, it should be understood that the casing as well as the general configuration of attenuator 14, including dampening medium 27, could be cylindrical, frusto-conical, or otherwise suitably shaped. However, it is believed that the tapered configuration of the attenuator will aid in increasing the range of dampened frequencies, as discussed above.

Industrial applicability

Fluidborne noise attenuator 14 finds particular application to the type of fluid circuit 10, illustrated in the drawing, wherein pressurized fluid (hydraulic) is communicated from pump 11, through attenuator 14 and to directional control valve 17, for selectively controlling the actuation of double-acting cylinder 18 and work implement or tool 21. However, attenuator 14 will find other obvious applications, well known to those skilled in the arts relating hereto, wherein fluid flow and pressure fluctuations will generate a wide range of noise frequencies. In comparison, the above-discussed and conventional type of fluidborne noise attenuator wherein an inert gas is used as a dampening medium will function efficiently for an application wherein fluid flow and mean pressure remain substantially constant, but will now work efficiently in the type of fluid circuit illustrated in the drawing wherein wide flow and pressure fluctuations are prevalent.

When the illustrated engine drives pump 11 during the normal operation of a construction vehicle, for example, the operator will periodically actuate directional control valve to either extend or retract cylinder 18. The flow and pressure fluctuations of the hydraulic fluid communicated to line 12 from the pump will create a wide range of noise frequencies which are efficiently dampened by attenuator 14 in the manner described above. As schematically illustrated, wave W at inlet 13 of attenuator 14, reflecting both flow fluctuations (Q) and pressure fluctuations (P), will have its amplitude substantially dampened, as depicted by wave W' at outlet 15 of attenuator 14. The fluidborne noises thus created by pump 11 and attendant components of circuit 10 will be substantially eliminated.

**Claims**

1. A hydraulic noise attenuator (14) comprising
   a rigid, tubular outer casing (22),
   flow passage means (14') for communicating hydraulic fluid through said attenuator (14), said flow passage means (14') having an inlet (13) at a first end thereof and an outlet (15) at a second end thereof, and
   means (27) for dampening fluidborne noise which means exhibit a bulk modulus substantially greater than the bulk modulus of a gas and substantially less than the bulk modulus of said hydraulic fluid, characterised in that for the attenuation of noise levels at frequencies that vary over at least substantially the entire frequency range of from 100 to 5,000 Hz generated by flow and pressure fluctuations of said hydraulic fluid by tuning said fluidborne noise attenuator (14) to various portions of the entire frequency range, said noise dampening means (27) is generally tubular in shape and tapered downwardly at least approximately uniformly from said first end (13) toward said second end (15) of said attenuator with the diametrical size of said noise dampening means (27) being larger at said first end than at said second end.

2. The fluidborne noise attenuator (14) of claim 1 wherein said noise dampening means (27) has a bulk modulus in the order of from 344.5 MPa (50,000 psi) to about 1240 MPa (180,000 psi).

3. The fluidborne noise attenuator (14) of claim 1 or 2 wherein said noise dampening means (27) constitutes a homogeneous material.

4. The fluidborne noise attenuator (14) of claim 3 wherein said homogeneous material at least essentially includes silicon.

5. The fluidborne noise attenuator (14) of claim 3 wherein said noise dampening means (27) at least essentially includes an elastomeric material.

6. The fluidborne noise attenuator (14) of any of claims 1—5 further including flexible conduit means (24) for defining said flow passage means (14') therethrough and for flexing radially outwardly when subjected to internal pressures by said hydraulic fluid, said noise dampening means (27) being disposed radially between said casing (22) and said conduit means (24).

7. The fluidborne noise attenuator (14) of claim 6 wherein said conduit means (24) is composed of polymeric material.

8. The fluidborne noise attenuator (14) of any of claims 1—7 wherein the diametrical size of said noise dampening means (27) at said first end is at least approximately twice as large as the diametrical size of said noise dampening means at said second end.

9. The fluidborne noise attenuator (14) of any of claims 1—8 further including a tubular casing (22) surrounding said noise dampening means (27) and wherein an inside surface of said casting (22) and an outer surface of said noise dampening means (27) at least generally define a hyperboloidic section.

10. The fluidborne noise attenuator (14) of any of claims 1—9 further including a plurality of radially disposed and longitudinally spaced baffles (23) extending radially inwardly into said noise dampening means, (27) to form compartment means for tuning said noise dampening attenuator (14) to various portions of said entire frequency range, the longitudinal spacing between said baffles (23) being varied.

11. The fluidborne noise attenuator (14) of claim 10 wherein the spacing between each pair of longitudinally adjacent baffles (23) becomes less from a first end of said attenuator towards a second end thereof.

12. The fluidborne noise attenuator (14) of claim 11 wherein the spacing between a first pair of baffles (23) adjacent to the first end of said attenuator is at least twice as great as the spacing between a second pair of baffles (23) adjacent to the second end of said attenuator.

13. The fluidborne noise attenuator (14) of claims 1—10 further including flexible conduit means (14), disposed interiorly of said noise dampening means (27), for defining said flow passage means (14') therethrough and for flexing radially when subjected to internal pressure by said hydraulic fluid.

14. The fluidborne noise attenuator (14) of claim 13 wherein each of said baffles (23) extends radially inwardly towards said flexible conduit means (24) to define a clearance (28) between an end (29) of each baffle (23) and said flexible conduit means (24).

**Revendications**

1. Atténuateur de bruit hydraulique (14) comprenant:

une enveloppe externe tubulaire et rigide (22),

un moyen de passage d'écoulement (14') pour faire communiquer le fluide hydraulique à travers ledit atténuateur (14), ledit moyen de passage d'écoulement (14') ayant une entrée (13) à une première extrémité et une sortie (15) à une seconde extrémité, et

un moyen (27) pour amortir le bruit dû au fluide, lequel moyen présente un module de volume sensiblement supérieur au module de volume d'un gaz et sensiblement inférieur au module de volume dudit fluide hydraulique, caractérisé en ce que pour l'atténuation des niveaux de bruit à des fréquences qui varient au moins sensiblement sur toute la plage des fréquences de 100 à 5000 Hz qui sont produites par les fluctuations d'écoulement et de pression dudit fluide hydraulique en accordant ledit atténuateur (14) du bruit dû au fluide à diverses parties de toute la gamme des fréquences, ledit moyen d'amortissement du bruit (27) est généralement de forme tubulaire et effilé vers le bas au moins à peu près uniformément à partir de ladite première extrémité (13) vers ladite seconde extrémité (15) dudit atténuateur, la dimension du diamètre dudit moyen d'amortissement du bruit (27) étant plus importante à ladite première extrémité qu'à ladite seconde extrémité.

2. Atténuateur (14) du bruit dû au fluide selon la revendication 1 où ledit moyen d'amortissement du bruit (27) a un module de volume de l'ordre de 344,5 mPa (50.000 psi) à environ 1240 mPa (180.000 psi).

3. Atténuateur de bruit dû au fluide (14) selon la revendication 1 ou 2 où ledit moyen d'amortissement du bruit (27) constitue un matériau homogène.

4. Atténuateur de bruit dû au fluide (14) selon la revendication 3 où ledit matériau homogène contient au moins essentiellement du silicium.

5. Atténuateur de bruit dû au fluide (14) selon la revendication 3 où ledit moyen d'amortissement du bruit (27) contient au moins essentiellement un matériau élastomère.

6. Atténuateur de bruit dû au fluide (14) selon l'une des revendications 1 à 5 comprenant de plus un moyen formant conduit flexible (24) pour définir ledit moyen formant passage d'écoulement (14') et pouvant fléchir radialement vers l'extérieur quand il est soumis à des pressions internes dues audit fluide hydraulique, ledit moyen d'amortissement du bruit (27) étant disposé radialement entre ladite enveloppe (22) et ledit moyen formant conduit (24).

7. Atténuateur de bruit dû au fluide (14) selon la revendication 6 où le moyen formant conduit (24) précité est composé d'un matériau polymérique.

8. Atténuateur de bruit dû au fluide (14) selon l'une des revendications 1 à 7 où la dimension du diamètre dudit moyen d'amortissement du bruit (27) à ladite première extrémité est au moins à peu près le double de la dimension du diamètre dudit moyen d'amortissement du bruit à ladite seconde extrémité.

9. Atténuateur de bruit dû au fluide (14) selon l'une des revendications 1 à 8 comprenant de plus une enveloppe tubulaire (22) entourant ledit moyen d'amortissement du bruit (27) et où une surface intérieure de ladite enveloppe (22) et une surface extérieure dudit moyen d'amortissement du bruit (27) définissent au moins généralement une section d'hyperboloïde.

10. Atténuateur de bruit dû au fluide (14) selon l'une des revendications 1 à 9 comprenant de plus un certain nombre de chicanes radialement disposées et longitudinalement espacées (23), s'étendant radialement vers l'intérieur dans ledit moyen d'amortissement du bruit (27) pour former des compartiments pour accorder ledit atténuateur amortissant le bruit (14) à diverses parties de toute la plage des fréquences, l'espacement longitudinal entre lesdites chicanes (23) variant.

11. Atténuateur de bruit dû au fluide (14) selon la revendication 10 où l'espacement entre chaque paire de chicanes longitudinalement adjacentes (23) diminue d'une première extrémité dudit atténuateur vers la seconde extrémité de celui-ci.

12. Atténuateur de bruit dû au fluide (14) selon la revendication 11 où l'espacement entre une première paire de chicanes (23) adjacente à la première extrémité dudit atténuateur est au moins le double de l'espacement entre une second paire de chicanes (23) adjacente à la seconde extrémité dudit atténuateur.

13. Atténuateur de bruit dû au fluide (14) selon les revendications 1 à 10 comprenant de plus un moyen formant conduit flexible (14) disposé à l'intérieur dudit moyen d'amortissement du bruit (27), pour définir ledit moyen formant passage d'écoulement (14') et pour fléchir radialement quand il est soumis à une pression interne due audit fluide hydraulique.

14. Atténuateur de bruit dû au fluide (14) selon la revendication 13 où chacune desdites chicanes (23) s'étend radialement vers l'intérieur, vers ledit moyen formant conduit flexible (24) pour définir un jeu (28) entre une extrémité (29) de chaque chicane (23) et ledit moyen formant conduit flexible (24).

**Patentansprüche**

1. Schalldämpfer (14) für eine Hydraulikquelle mit einem starren röhrenförmigen äußeren Gehäuse (22), einem Strömungsdurchgang (14'), um ein hydraulisches Fluid durch den Schalldämpfer (14) zu übertragen, wobei der Strömungsdurchgang (14') einen Einlaß (13) an seinem ersten Ende und einen Auslaß (15) an seinem zweiten Ende aufweist, und einer Einrichtung (27) zum Dämpfen eines durch das Fluid übertragenen Schalles, die einen Elastizitätsmodul aufweist, der beträchtlich größer als der Elastizitätsmodul eines Gases und beträchtlich kleiner als der Elastizitätsmodul des hydraulischen Fluids ist, dadurch gekennzeichnet, daß zur Dämpfung von durch Fluß- und Druckschwankungen des hydraulischen Fluids erzeugten Schallpegeln, die bei Frequenzen liegen, die über wenigstens im wesentlichen den gesamten Frequenzbereich von 100 bis 5,000 Hz variieren, durch Abstimmung des Dämpfers (14) für den durch das Fluid übertragenen Schall auf verschiedene Teile des gesamten Frequenzbereiches, die Einrichtung (27) zur Dämpfung des Schalles im allgemeinen röhrenförmig ist und sich wenigstens annähernd gleichmäßig von dem ersten Ende (13) in Richtung auf das zweite Ende (15) des Dämpfers nach unten verjüngt, wobei die diametrische Größe der Einrichtung (27) zum Dämpfen des Schalles an dem ersten Ende größer ist als an dem zweiten Ende.

2. Dämpfer (14) für einen durch ein Fluid übertragenen Schall nach Anspruch 1, bei dem die Einrichtung (27) zur Dämpfung des Schalles einen Elastizitätsmodul aufweist, der in der Größenordnung von 344,5 MPa (50,000 psi) bis etwa 1240 MPa (180,000 psi) liegt.

3. Dämpfer (14) für einen durch ein Fluid übertragenen Schall nach Anspruch 1 oder 2, bei dem die Einrichtung (27) zur Dämpfung des Schalles aus einem homogenen Material besteht.

4. Dämpfer (14) für einen durch ein Fluid übertragenen Schall nach Anspruch 3, bei das homogene Material wenigstens im wesentlichen Silizium enthält.

5. Dämpfer (14) für einen durch ein Fluid übertragenen Schall nach Anspruch 3, bei dem die Einrichtung (27) zum Dämpfen des Schalles wenigstens im wesentlichen ein Elastomermaterial enthält.

6. Dämpfer (14) für einen durch eine Flüssigkeit übertragenen Schall nach einem der Ansprüche 1 bis 5, bei dem außerdem ein flexibles Rohr (24) vorgesehen ist, das den Strömungsdurchgang (14') begrenzt, und sich radial nach außen biegt, wenn es durch das hydraulische Fluid Innendrücken unterworfen wird, wobei die Einrichtung (27) zur Dämpfung des Schalles in radialer Richtung zwischen dem Gehäuse (22) und dem Rohr (24) angeordnet ist.

7. Dämpfer (14) für einen durch ein Fluid übertragenen Schall nach Anspruch 6, bei dem das Rohr (24) aus einem Polymermaterial besteht.

8. Dämpfer (14) für einen durch ein Fluid übertragenen Schall nach einem der Ansprüche 1 bis 7, bei dem die diametrische Größe der Einrichtung (27) zur Dämpfung des Schalles an dem ersten Ende wenigstens etwa zweimal größer ist als die diametrische Größe der Einrichtung zum Dämpfen des Schalles an dem zweiten Ende.

9. Dämpfer (14) für einen durch ein Fluid übertragenen Schall nach einem der Ansprüche 1 bis 8, bei dem außerdem ein röhrenförmiges Gehäuse (22) die Einrichtung (27) zur Dämpfung des Schalles umgibt und bei dem eine Innenfläche des Gehäuses (22) und eine außenfläche der einrichtung (27) zur Dämpfung des Schalles wenigstens im allgemeinen ein hyperbolisches Teil bestimmen.

10. Dämpfer (14) für einen durch ein Fluid übertragenen Schall nach einem der Ansprüche 1 bis 9, bei dem außerdem eine Mehrzahl von radial angeordneten und in Längsrichtung voneinander beabstandeten Schallwänden (23) vorgesehen ist, die sich in radialer Richtung in die Einrichtung (27) zur Dämpfung des Schalles hineinerstrecken, um Abteilungen zum Abstimmen des Dämpfers (14) zum Dämpfen des Schalles auf verschiedene Teile des gesamten Frequenzbereiches zu bilden, wobei der Abstand in Längsrichtung zwischen den Schallwänden (23) variiert ist.

11. Dämpfer (14) für einen durch ein Fluid übertragenen Schall nach Anspruch 10, bei dem der Abstand zwischen jedem Paar von in Längsrichtung benachbarten Schallwänden (23) von einem ersten Ende des Dämpfers in Richtung auf ein zweites Ende des Dämpfers kleiner wird.

12. Dämpfer (14) für einen durch ein Fluid übertragenen Schall nach Anspruch 11, bei dem der Abstand zwischen einem ersten Paar von Schallwänden (23) in der Nähe des ersten Endes des Dämpfers wenigstens zweimal so groß ist wie der Abstand zwischen einem zweiten Paar von Schallwänden (23) in der Nähe des zweiten Endes des Dämpfers.

13. Dämpfer (14) für einen durch ein Fluid übertragenen Schall nach einem der Ansprüche 1 bis 10, bei dem außerdem ein flexibles Rohr (14) innerhalb der Einrichtung (27) zum Dämpfen des Schalles angeordnet ist, um den Strömungsdurchgang (14') zu bestimmen und um sich nach außen zu biegen, wenn es durch das hydraulische Fluid einem Innendruck unterworfen wird.

14. Dämpfer (14) für einen durch ein Fluid übertragenen Schall nach Anspruch 13, bei dem sich jede Schallwand (23) radial nach innen in Richtung auf das flexible Rohr (24) erstreckt, um einen Zwischenraum (28) zwischen einem Ende (29) jeder Schallwand (23) und dem flexiblen Rohr (24) zu bilden.